# EUROPEAN PATENT APPLICATION

(11) **EP 3 171 328 A1**
(43) Date of publication of application: **24.05.2017**
(21) Application number: 14897506.3
(22) Date of filing: 14.07.2014
(51) Int. Cl.: G06Q 99/00

(54) **HANDWRITING ANALYSIS TEST WITH OBSTACLE TO VISA SIGNATURES WITH A NAKED EYE**

(71) Applicant: Giron Espon, Juan Miguel, Ciudad de Guatemala 01010 (GT)
(72) Inventor: GIRON ESPON, Maria Andrea, Ciudad de Guatemala 01010 (GT); GIRON ESPON, Jaime Ovidio, Ciudad de Guatemala 01010 (GT); ESPON REYES DE GIRON, Clara Luz, Ciudad de Guatemala 01010 (GT); GIRON CABRERA, Jaime Ovidio, Ciudad de Guatemala 01010 (GT)
(74) Representative: Brunazzi, Stefano
(86) International application number: PCT/GT2014/000001
(87) International publication number: WO 2016/009234

(57) **Abstract**

The technical field of the invention is: **HANDWRITING ANALYSIS OF THE SIGNATURE AFFIXED BY A PERSON, IN A DOCUMENT IN ANY LANGUAGE THAT REQUIRES TO BE SIGNED TO AUTHORIZE OR APPROVE ITS CONTENT.**

The invention consists in to make NOTORIOUS the precision conformity or disconformity of an own handwriting signature in order that the person who does not have the theoretical and technical knowledge of an expert in calligraphy analysis of questionable signatures, be able to act carefully and with prevention according to the modern celerity to accept or deny as valid a signature affixed in any kind of document with alphanumeric reference or without alphanumeric reference by visaing it with a naked eye, evaluating for such purpose a signature affixed on an/some obstacle(s) of any geometrical shape and of any kind of material or any color, which was/were placed and stuck up/on a place of the document to be visaed or on another external support to the document to be visaed, such obstacle(s) impede the normal stroke of the ink instrument with which the signature is written, and whose the structure resulting of the signature over the obstacles it is collated with the structure of the questionable signature and/or with the structure of the signature is considered as indubitable.

In the procedure of the invention the obstacles produce difficulty when the signature is affixed causing stops and shaking in the handwriting graphic path that constitutes the particular features and fundamental factors of the handwriting calligraphy identity of the original signer, and the physical resistance caused by such obstacle and the physical resistance of the obstacle caused by the invention when the signature is repeated can be corrected only by the original signer, so the invention makes clearly NOTORIOUS if there are DISSIMILARITIES, DIVERGENCES, COINCIDENCES, IDENTIFICATION in the natural performance from the beginning to the end of the handwriting, that allows that a person who is not an expert be able to conclude in situ the **morpho - dimension of the evaluated signatures** were or were not affixed by the same persons.

And before such procedure the invention allows the signature inspector to observe with a naked eye and assess directly the signature submitted for approval or consent and **can be completed in real time:** whether or not there IS DOUBT REASONED IF THERE ARE RESEMBLANCE OR SIMILARITIES with the authentic signature and therefore he/she CAN DENY or AUTHORIZE THE DOCUMENT SUBMITTED TO BE VISAED, without relying on the signature inspector to be a handwriting expert in any moment and on any time.

THE INVENTION IS INTENDED TO PREVENT THE FRAUD IN ITS FULLEST EXTENT by analyzing with a naked eye a questionable signature and being able to conclude if it is deny o accept without being an in expert on the field and in real time.

## Description

### "TECHNICAL AREA:"

The technical area of the invention is: **HANDWRITING ANALYSIS IN SIGHT OF THE SIGNATURE AFFIXED BY A PERSON IN ANY KIND OF DOCUMENT IN ANY LANGUAGE OR TIME, WHICH REQUIRES TO BE SIGNED FOR AUTHENTICITY OR APPROVAL OF ITS CONTENT.**

The purpose of the invention is: ***"To make NOTORIOUS the precision conformity or disconformity of an own handwriting signature in order that the person who does not have the theoretical and technical knowledge of an expert in calligraphy analysis of questionable signatures, be able to act carefully and with prevention according to the modern celerity to accept or deny as valid a signature affixed in any kind of document with alphanumeric reference or without alphanumeric reference in any language or time, by visaing it with a naked eye; evaluating for such purpose a signature affixed on an*/*some obstacle(s) of any geometrical shape and of any kind of material or any color, which was*/*were placed and stuck up*/*on a place of the document to be visaed or on another external support to the document to be visaed, such obstacle(s) impede the normal stroke of the ink instrument with which the signature is written, and whose the structure resulting of the signature over the obstacles it is collated with the structure of the questionable signature and*/*or with the structure of the signature is considered as indubitable".***

### "TECHNIQUE:"

**From THE FOREGOING TECHNIQUE TO THE INVENTION, we can say:** that today as it is stated in any environment of the human activity in which when any kind of document requires of a signature for authenticity or approval of its content, the document is visaed by a person (signature inspector) who with a naked eye has to accept it as a valid signature or deny as a doubtful signature, currently the signature inspector does not have any procedure in situ to make **NOTORIOUS the precision conformity or disconformity** of the signature structure affixed on the document, the signature inspector only has his/her experience and as he/she is not a handwriting analysis expert to make the decision to accept or deny the signed document in situ; currently in the analysis of the structure of a signature there is no obstacle used that impede the normal stroke of the ink instrument with which the signature is written; the documents that require of signatures are free of obstacles to be signed in the moment that has not the signature and in the moment to sign it.

**HOWEVER, WITH THE INVENTION SUBMITTED IN THIS DOCUMENT**, since now, the person who is responsible to visa with a naked eye at any moment any kind of document in any language that requires to be signed, is able to analyze if the signature affixed in such document can be accepted as valid or can be denied since it is a doubtful signature, **because when the signature inspector uses this procedure, it allows to make notorious the precision conformity or disconformity** of the questionable signature collating it in situ with the one that is considered as a indubitable signature, using for such analysis an/some obstacle(s) that produces a/some step(s) over which the evaluated signature must be affixed, this/these obstacle(s) since now can be considered also as "a priori", "in situ" and "a posteriori" instrument for a handwriting analysis expert work.

### "DISCLOSURE OF THE INVENTION:"

The description of the invented procedure to visa at any moment any kind of document in any language with alphanumeric reference or without alphanumeric reference, which requires the authorization or approval of its content through the own handwriting signature of a person, **IS:** collating the indubitable signature against the one signature affixed in situ on the obstacle(s) placed and stuck up/on a spot of the document to be visaed or in another external support of the document to be visaed.

### "WAY OF CARRING OUT THE INVENTION:"

And for such effect, the invented procedure consist to sign over a/some obstacle(s) placed and stuck in a spot of the document to be visaed or in another external support of such document, where the mentioned obstacle(s) produces at least one physical step/obstacle that causes a physical resistance in the advance of the ink instrument used to sign, such signature must be affixed in situ over such obstacle(s), and the result to affix the signature over the obstacle(s) is collated against the indubitable signature of the person who with own sign authorizes or approves the content of the document to be visaed; and this procedure can be repeated the times that the signature inspector deems convenient. It is possible that affixed the signature over the obstacle(s) for "a posteriori" analysis, too. Such obstacle(s) is/(are) placed and stuck on the spot of the signature with an advisable distance if it is placed by hand or with a calculated distance if it is placed mechanically; it can be produced more than one step created with such obstacle(s) affixing one over the other or separated of the other, the specific size of the obstacle and the number of obstacles will depend on the size of the signature and also will depend of the person who will apply the procedure. The distance in which the obstacle(s) will be place and stuck depends on the size of the document to be signed. The obstacle(s) can be placed and stuck previously by hand or mechanically, or can be placed and stuck at the moment to sign, even after sign the document, with the purpose to visa one more time, if the signature inspector deems convenient. The order and/or the position in the document, in which the procedure will be carried out, do not alter or change the results.

**The signature affixed over the obstacle(s) will be collated against the one that is considered a SIGNATURE AS INDUBITABLE.**

**Being able to be considered a SIGNATURE AS UNDOUBTED: (A)** the one that is previously registered on any other media or support on one or more obstacles or only on the blank corresponding area in such media or support, **(B)** the signature that is already affixed on an obstacle(s) in the original document, **(C)** the signature that is already affixed initially on the corresponding space in the same document to be visaed, **(D)** the questioned signature itself the one just that the signer has affixed on the corresponding space in the same document to be visaed before the signature inspector, **(E)** the first signature that the signer just has written.

The material and thickness of the obstacle(s) can be of any kind and color or transparent, such decision depends on who will carry out the procedure.

Using to run the procedure any type of ink instrument to write: of any kind color and of any type of ink.

To obtain different levels of analysis it can be superimposed an obstacle on obstacle to produce different levels of steps/obstacles to affix the signature in situ or to affix the signature in a document at any moment to be used as indubitable signature in any time; likewise, the obstacle(s) can be placed and stuck in the middle of the all signature, and it can be a square, round, rectangular or any symmetrical or asymmetrical geometric shape depending on which is the use and the level of results that the user wish to obtain, also can be placed several obstacles one after the other continuously or discontinuously depending on the size of the signed to be visaed and the resulting obstacle can be of any thickness may be causing a step.

### "THE CURRENT TECHNIQUE AND ITS INTRINSIC PROBLEMS, WHICH ARE SOLVED WITH THIS INVENTION:"

Consequently, the purpose of the invention is to provoke the **NOTORIOUS** of a signature fixed on a document which may cause injury to the person who is authorized to sign such document, if such signature turns out not own handwriting signature affixed by him/her because it is a FALSE/FRAUDULENT signature; likewise, when the act to accept such document as valid for the signature affixed cause damage to a third party or to a public authority if the signature was false. To solve this current problem in the society the invention proceeds to cause such notoriety to make clear evidence of the signature to be analyzed: HIGHLIGHTING WITH A NAKED EYE the structure of the doubtful signature, to compare such signature with the structure of the undoubted signature that is previously registered in any way; for such effect, the procedure uses the obstacle(s) that placed and stuck to the document to be visaed (or in another external support of the document to be visaed) to produce a step(s) that itself consisting in an ARTIFICIAL OBSTACLE to the person who signs that causes STOPS AND SHAKINGS IN HIS/HER HANDWRITING THAT CONSTITUTE THE PARTICULAR FEATURES AND FUNDAMENTAL FACTORS OF THE HANDWRITING IDENTITY OF THE ORIGINAL SIGNER.

And the physical resistance caused by such obstacle(s), the reason of the invention, can be corrected only by the ORIGINAL SIGNER in the set of features of general and individual order that forms the structure of his/her signature, pursuant to which the invention clearly evidences if there are DISSIMILARITIES, DIVERGENCES, OVERLAPS, IDENTIFICATION in the natural performance from the beginning to the end of the some handwriting strokes, that allows that a person who is not an expert be able to conclude in situ if the **morphological-dimension of the evaluated signatures** were or were not affixed by the same person, and before such procedure of the invention allows the signature inspector to observe at first glance and assess directly the signature submitted for approval or consent and **can be concluded in real time:** whether or not there is doubt reasoned if there are SIMILARITIES OR SIMILITUDES with the authentic signature and therefore the signature inspector can DENY OR ACCEPT THE DOCUMENT SUBMITTED TO BE VISAED, without relying on the signature inspector to be a handwriting analysis expert.

In summary the invention allows handwriting analysis of the signature, in an effective, simple and easy way at low cost and easy to use to compare one indubitable signature with a questioned signature performed with physical and mental inconvenience (pressure used to do the signature, when it is done before the signature inspector) and make the best decision regarding the validity of the signature and/or signer. The invention may be applied in any human activity at any time in any country in any language that needs to visa a document (that requires to be signed) in order to accept or deny it. THE INVENTION IS INTENDED TO PREVENT THE FRAUD IN ITS FULLEST EXTENT by analyzing with a naked eye a questionable signature and can to conclude if it is deny o accept without being an in expert on the field and in real time.

### "ADVANTAGEOUS EFFECTS OF THE INVENTION:"

**From the relative things to the handwriting we submit the invention to the different technique propositions of the subject, and consequently:**
1) Regarding to the statements of Solange Pellat, **we can state that the invention allows:** To submit the person and his/her signature to examination in any language; potentiates that the signature results directly from the cerebral impulse of the evaluated person; it hinders the effort that cannot be performed slowly because it "crashes" with the step of the obstacle; constitutes an important tool since it consists in itself a particularly difficult condition further causing that the handwriting strokes of the signature be the one of the person who must sign the document, and this hinder the masking of the own signature, or the imitation of the signature of a third party, this issues are difficult with the invention IN REAL TIME, since it potentiates the action of the I (the own person) as well as ACCENTUATE the individuality of the handwriting.
**2)** Regarding to the statements of Ludwig Klages, **we can state that the invention:** impede the copy of the signature of a third person since the invention obligates the own expression of the person who execute the signature, without being able to subtract the involuntary and instinctive acts; hinders inner figuration that raises the unconscious wait of the presumed result of the movement; it highlights the performance of the most apparent handwriting strokes allowing the observation with a naked eye, whether denote false signature, a simulated or anemography signature; it makes difficult to modify the curve and angular handwriting; when the person who signs FORCE THE EFFORTS he/she will evidence the individualization of the forgery; it causes difficulty of the VOLUNTARY CONTROL when he/she writes, it potentiates the individuality of the SPEED, EXTENSION AND PRESSURE of the person who affix the signature.
**3)** Regarding the statement of P HUMBERT **we can state** that when the invention TO HINDER THE SIMILARITIES, the invention makes more insufficient the similarities to demonstrate the authenticity of the signature.
**4)** Regarding to some of the statements of SAUDEK **we can state that the invention** allows submit to exam the signature of the person under the fundamental principle of Saudek that nobody is able to imitate the handwriting of another person at the same time of these five elements of writing: a) wealth and variety of form; b) Dimensions (calibro); c) linkage; d) Inclination; e) Pressure.
**5)** Regarding to the observations of MORETTI, **we can state that the invention** which is only a test whose principal rule is the common sense of the person who evaluates the signature (the signature inspector) can somehow objectively cause an effect within the various moods of the signer, since he/she has to do his/her signature in a concentrated manner and for a specific subject, and at the same time it presses on his/her mood if his/her intention is masking his/her signature or the simulation of the signature of a third party, which will be apparent to one who examines the signature.
**6)** Regarding to the process that leads the handwriting build up by several functions such as language, motor function, emotions, **we can state that the invention** has presence in the organization on the desk space of the ductus, being it the center of the set of all movements necessary for the act of signing both PREPARATORY MOVEMENTS as the approach of the ink instrument to the sheet with the obstacle and the OPERATING MOVEMENTS which comprises the movements of paper separation and the step that produces the obstacle, by several suspensions and spaces between one letter and another and between words, the points, the "t" cuts, the punctuation, to link parts of the successive letters. The invention induces the stroke that appears difficult the ductus of the set of movements used to obtain the strokes.
**7) We can state** that the result of the invention is not altered by the own characteristics of the writing such as age, gender, culture, nationality, profession or left-handed writing features.
**8) We can state** that the invention is an expert operation that uses the COMMON SENSE of the person who examines a questionable signature when the examiner is NOT A HANDWRITING ANALYSIS EXPERT, and for the person who is an EXPERT this invention is one more tool of analysis.
**9) We can state** that the invention resizes the FEATURES OF THE LETTER OF A PERSON AFFIXED IN HIS/HER SIGNATURE, it means that it allows make obvious the GRAPHISM to decide whether or not to accept a questionable signature as an indubitable signature.

**We can state the following issues about the invention used to evaluate a signature through immediate observation without expertise instruments:**
**1)** The invention itself is always an original document that individualizes the handwriting, the paper used and a suitable support surface; avoiding the presence of cancellations, additions, retouching, tweaks and substitutions; which potentiates the observation of the path to visa the graphic level and particularly the spontaneity and nature of the signature.
**2)** In conclusion the invention SYNTHESIZES EXPERTISE to the fact that a non-expert in handwriting analysis may induce with a naked eye COMPARATIVE ANALYTICAL STUDY with a stamped signature over an obstacle, since the invention highlights in the comparison of: similarities, analogy and identity of signals, but MOSTLY THE GRAPHIC SIGNAL AS A WHOLE, THE PRINT OF THE SIGNATURE WHO PERFORM IT; the invention allows a final judgment that stand out the following facts WITH A NAKED EYE of the person who evaluates the signature:
   **a.** The nature and spontaneity;
   **b.** The quality of the features (connoted), including whether it is just one;
   **c.** Mismatch;
   **d.** Significant differences;
   **e.** Any qualitative difference;
   **f.** The compatibility or incompatibility graphological and gestural;
   **g.** Highlight symptoms of sincerity and authenticity probably related to the speed, balance and harmony of the set, the vitality appearance that the signature produces;
   **h.** Highlights the fake regarding to the symptoms of lack of sincerity and then the symptoms of a probable fake signature, related to the slow, disharmony of the set, the signs of insecurity, frequent retakes, of his/her left hand, lack of vitality and preventing retouching;
   **i.** Highlight a fake signature by distortion of the signature when it is itself masking his/her signature also when someone wants to imitate the signature of other person;
   **j.** The invention prevents imitation by direct tracing transfer or by indirect tracing, since the obstacle does not allow to do so; and also prevents imitation by cutout composition and photomontage;
   **k.** The invention potentiates the rates of fake recognition including the imperfections of the track, jams, agitations, delays, ascending the faint tremor, fine detail to observe and copy the model, abnormal interruptions, the retakes, retouching, correcting the bad strokes facts, scratching, excessive identity with the authentic signature;
   **l.** The invention potentiates rates of falseness such as tremors, slow, lateral infiltration of ink, interruptions or suspensions in the layout, loads of inks, the two dots on the "i", too much care, brief signature, the identity of superimposed paths, retouching in upper extension cords, undulations or variations in the height of the letters, the limited availability to give samples.

### "INDUSTRIAL APPLICATION:"

Some areas of the Invention:
**1) In the financial area,** in any bank or financial instruments of any type, that needs to be signed for authorization, acceptance, issuance, collection and / or endorsement, such as documents in transactions deposits, current accounts certificates of all kinds, obligations of any kinds, portfolio titles and other all types, credits, debits, and domestic and foreign operations and estate, trust and collateral operations, cash receipts and payments for third parties, safety deposit boxes, cashier checks as well as management and any other type custody and administration of values, collection of government taxes of any level and type, collateral transactions such as leasing, factoring and confirming forfaiting, investment funds, fiduciary activities, credit and debit cards ; as well as documents to be signed on the insurance policies of any kind, bonds of any type. All checks of any type.
**2) In the legal area,** in any public and / or private legal instrument with effect to third parties for any type, that needs to be signed for authorization, acceptance, registration statement, issue, notice, certification, such as in documents contain any type of judicial decisions, orders and court reports, authentic signatures, affidavits of any kind, affidavits, legal settlements of any kind, books or sheets of judicial control; contracts deeds and / or deprived of any kind and nature, deeds of any kind, any kind of wills, property records of any kind; in the civil area registrations, cancellations, extensions, certification as birth, marriage, divorce, death, among others.
**3) In the diplomatic area,** in any diplomatic instrument of any kind, that needs to be signed for authorization, acceptance, registration statement, issue, notice, certification documents such as, among others, such as: a) passes control law, legalization of foreign documents with effect in its territory; b) the signature of agreements between governments; c) control of the international passport valid through the stamped signatures of handwriting who carries it.
**4) In the commercial area,** in any commercial instrument of any kind required to be signed for authorization, acceptance, registration statement, issue, notice, certification, such as in documents such as: a) Meetings of Shareholders; b) commercial records; c) share certificates; d) Form Companies Registration; e) employment relationship; f) contracts and business titles of all kinds; g) Cut Sheet and / or carrying of employment assistance; h) commercial resolutions and certifications; i) actions contained in commercial books of all kinds; j) issuing and receiving invoices, purchase order, sales order, receipt of goods, claims, refunds, shipping notes, returns, passwords of any kind, among others.
**5) In the governmental area,** in any governmental instrument of any level, of any type, that needs to be signed for authorization, acceptance, registration statement, issue, notice, certification, such as documents containing any government and / or administrative resolutions; agreements, orders, certifications and government reports and / or administrative; agreements, orders, certifications and government reports and / or administrative provisions of any kind; books or sheets of government control and / or administrative, government contracts and / or administrative deeds and / or deprived of any kind and nature, governmental agreements of any level and any laws or legislative decrees, legislative instrument of any kind, educational qualifications, any tax instruments, forms of social assistance, licenses or permits of any level and any type issued by government agencies, participation and granting of public contract bid of all kinds.

### DRAWINGS

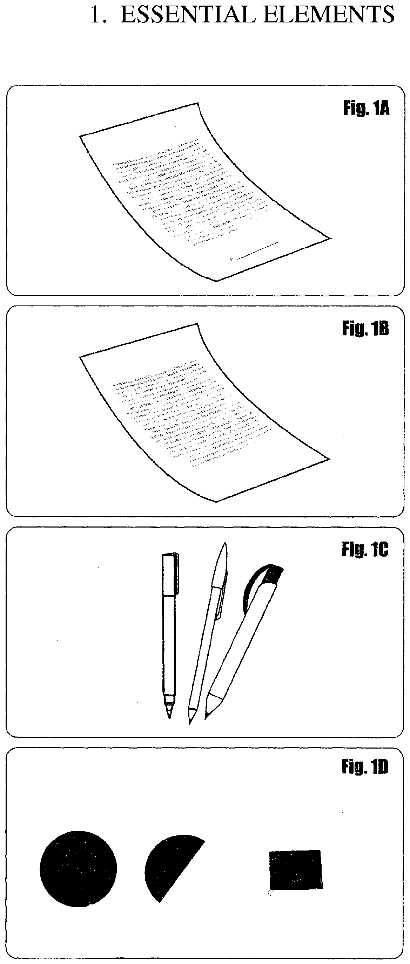

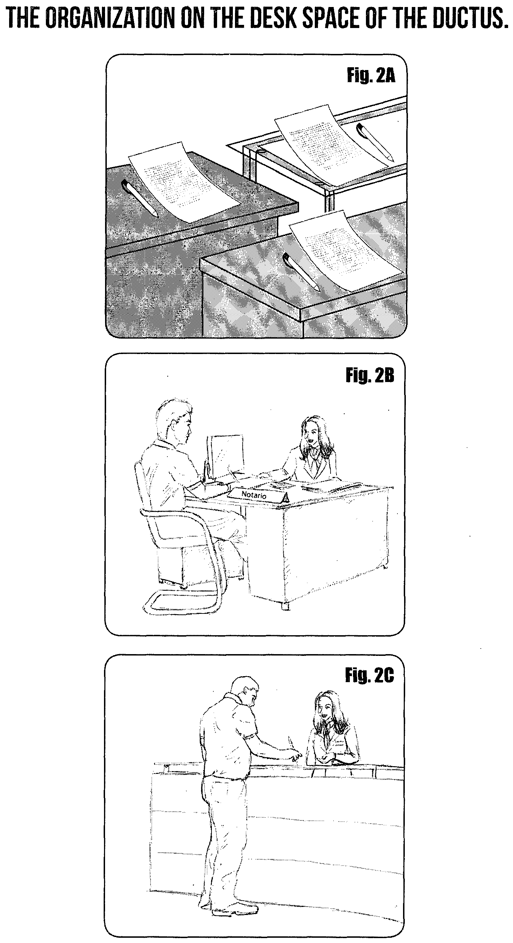

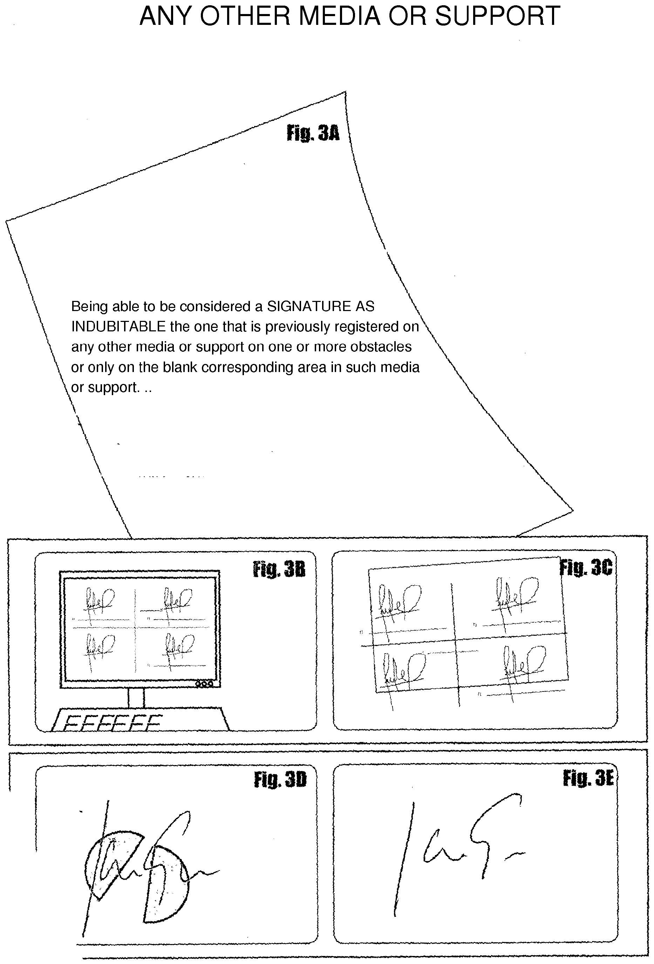

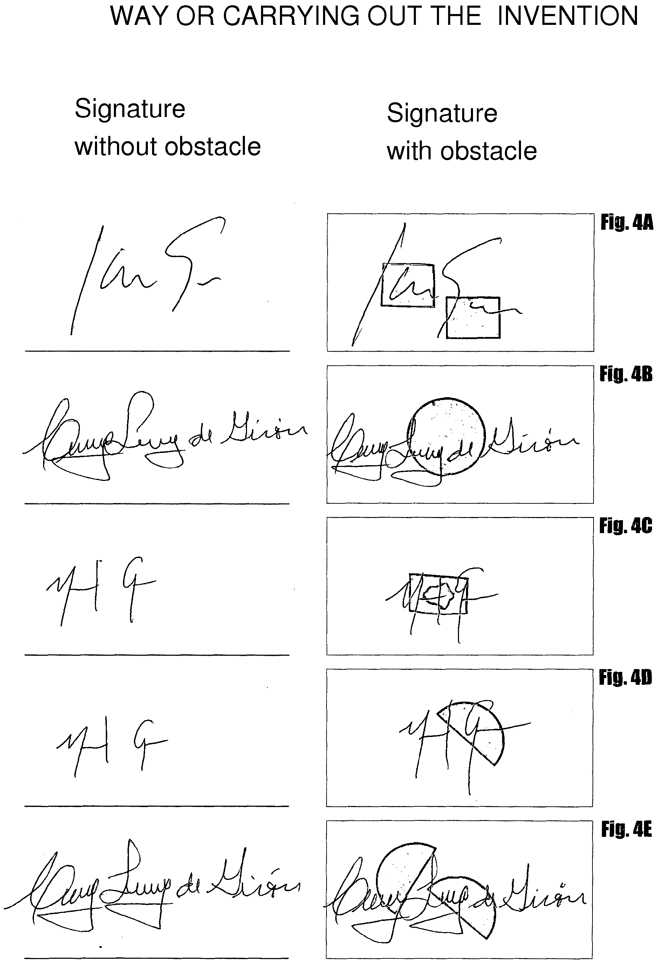

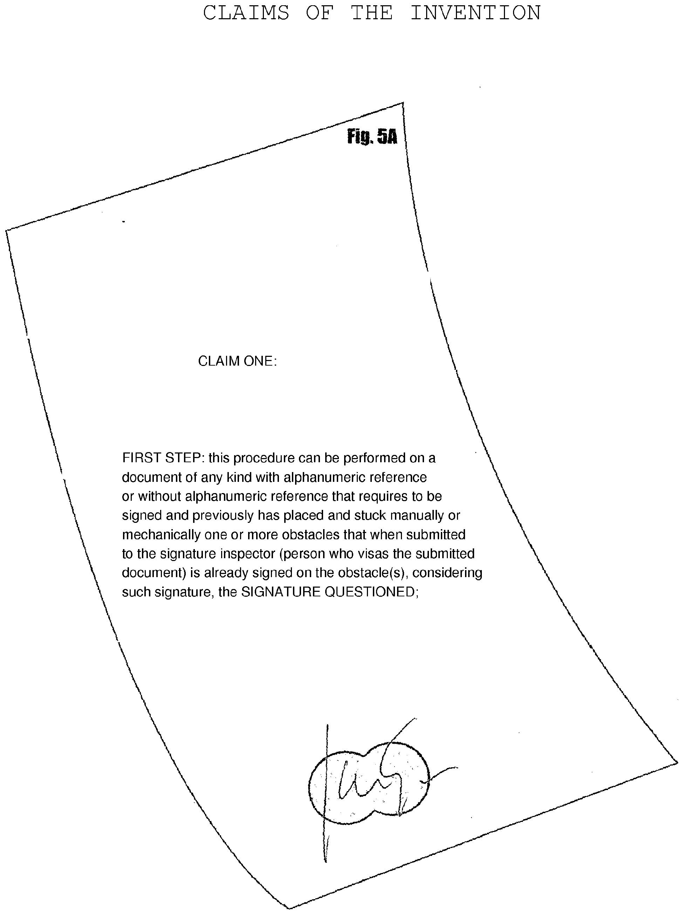

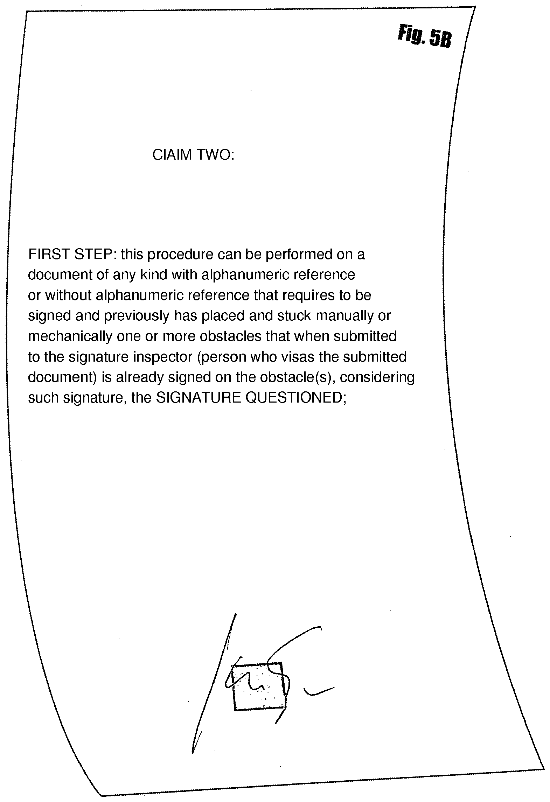

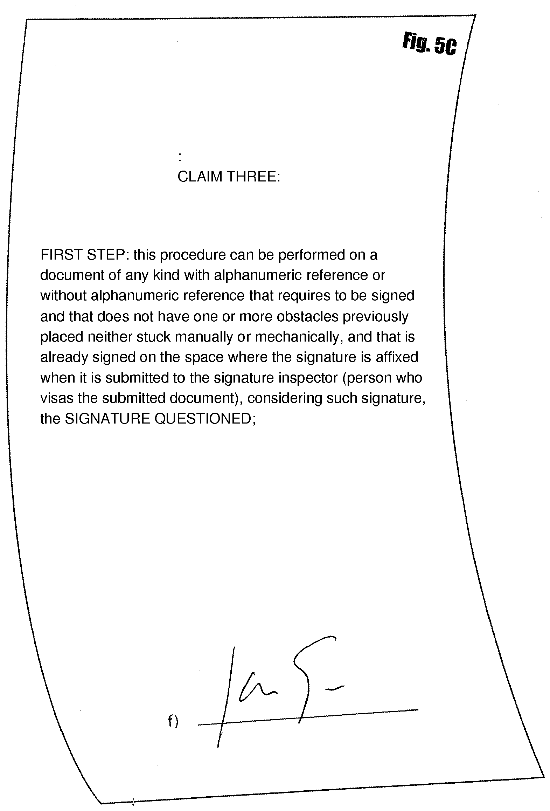

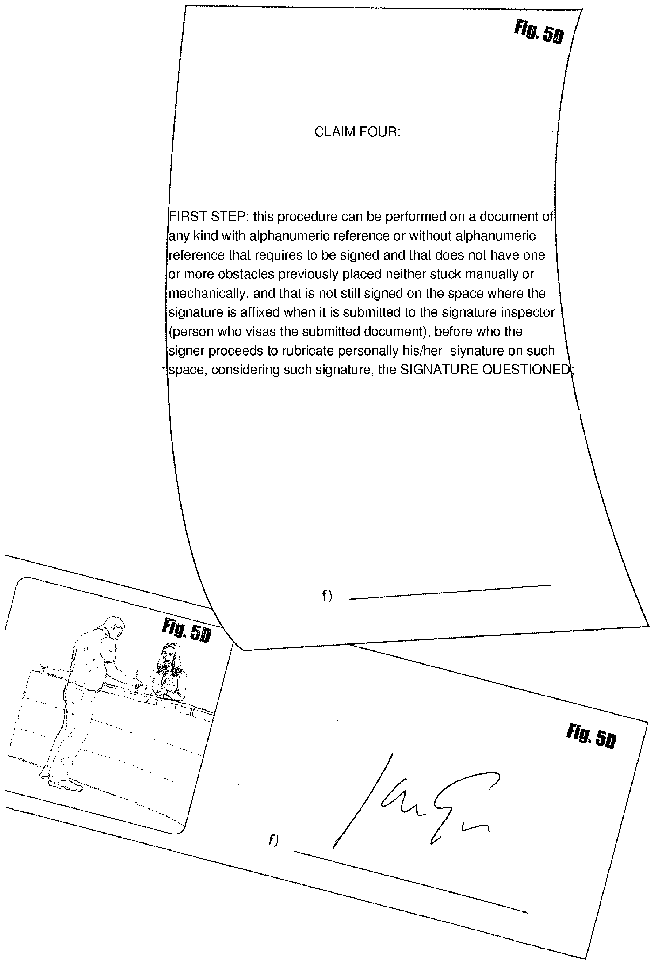

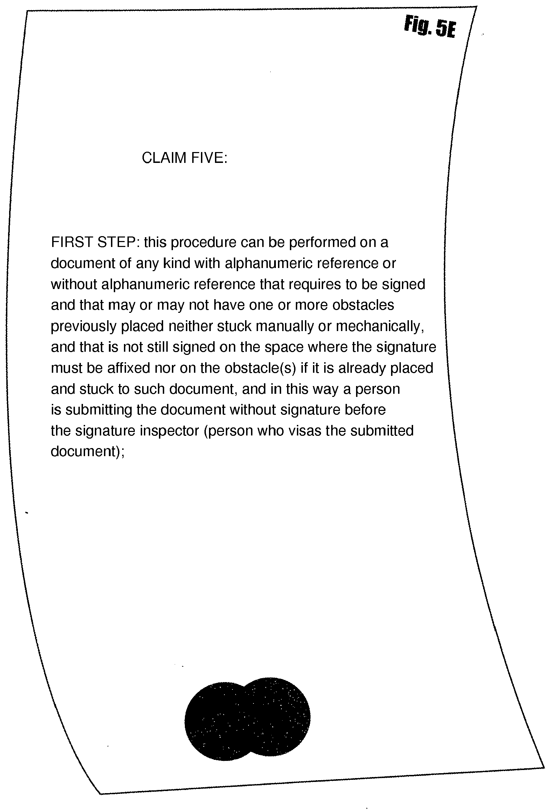

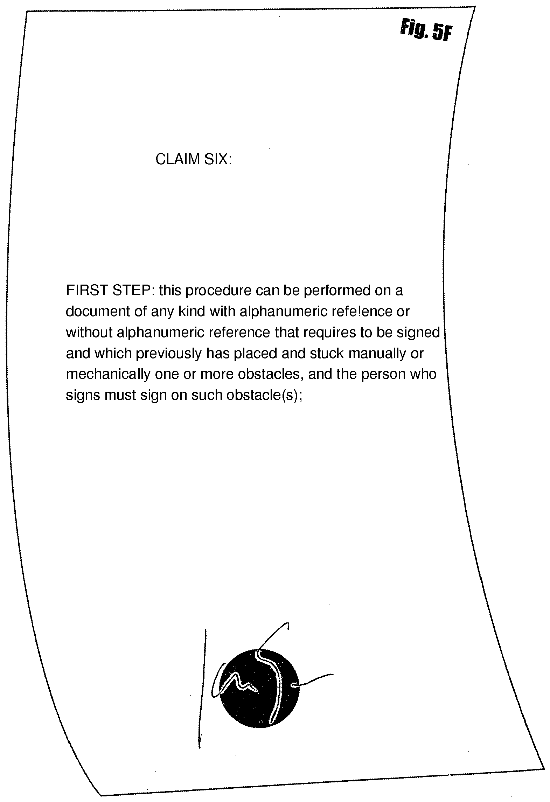

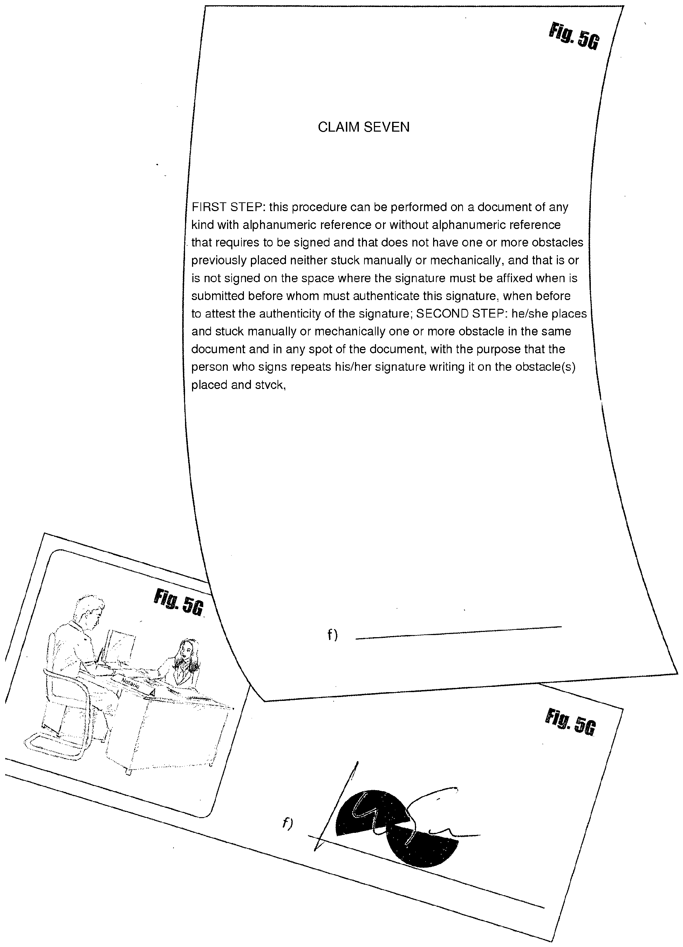

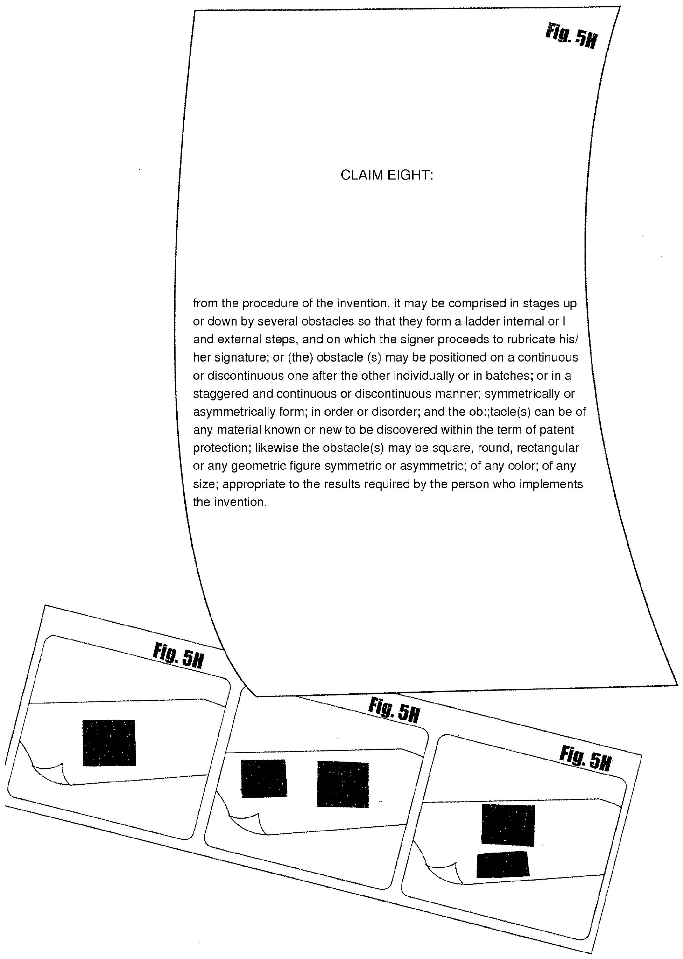

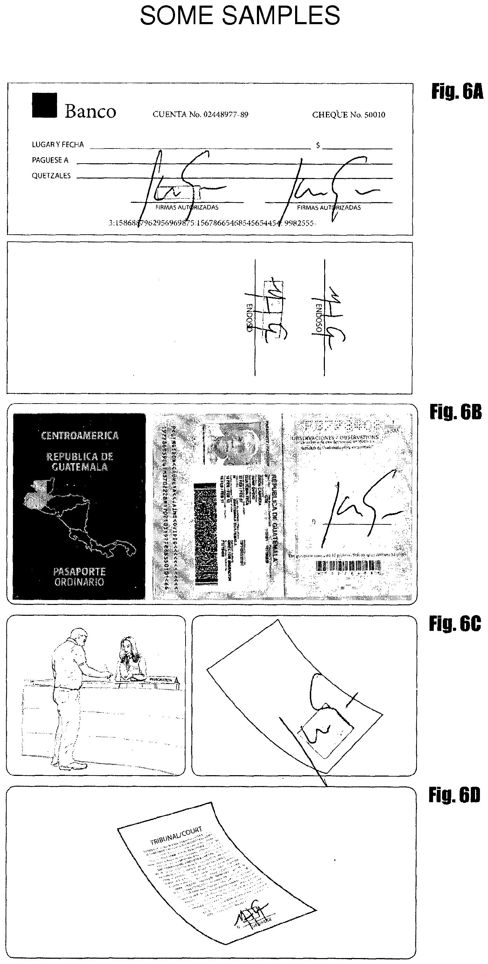

This invention is a procedure in written documents reason why the drawing which better represent it are the following, and where the invention with colored obstacle has been applied so when it is reproduced that obstacle can be seen:
**Number one (3/15), essential elements,** where the figure 1A represents a document with stamped signature in the usual place; the figure 1B represents a document with stamped signature on an obstacle; the figure1C represent some ink instruments to sign; the figure ID is physically represented with some obstacles.
**Number two (4/15), desk space organization of the ductus**, where the figure 2A represents three different types desk space of the ductus that can be of wood, glass, metal among others; the figure 2B represents a desk space of the ductus where who signs is seated; the figure 2C represents a desk space of ductus where who signs is standing up.
**Number three (5/15), any other media or support,** the indubitable signature an be in other extern document to the document who contains the questionable signature (figure 3A), and can be in the digital system like the figure 3B, or in a signature card like the figure 3C, or on an obstacle like the figure 3D, or without obstacle signed in situ like the figure 3E.
**Number four (6/15), way or carrying out the invention**, from the figure 4A to the figure 4E, there are different types of the executed signature without the obstacle and the same executed signature with different types of obstacles {which are colored in case of eventual reproduction) with which the utility of the invention is proven.
**Number five (from 7/15 to 14/15), claims of the invention**, the best way of explaining each one is transcribing the first step, each claim identified with its corresponding figure.
**Number six (15/15), some examples,** one the way of explaining some applications of the invention that is done with three different examples, where the first represents a bank check where the account owner signs again on an obstacle like in the figure 6A, and the same way who endorse it can sign again o an obstacle; where the second represents at the migratory control place of any country where the immigration officer like in the figure 6C, with the purpose of confirming the international passport like in the figure 6B belongs to who is carrying it, makes him/her sign in an external support like in the figure 6C to accept or deny at his/her(officer) criteria the entry to the country to the traveler; where the third example presents a judicial judgment where the judge signs on an obstacle for a future eventual verification that is his/her signature indeed like in the figure 6D.-

## Claims

1. *"JJASPON HANDWRITING ANALYSIS TEST WITH OBSTACLE TO VISA SIGNATURES WITH A NAKED EYE ON DOCUMENTS REQUIRING TO BE SIGNED (JJASPON HANDWRITING ANALYSIS TEST WITH OBSTACLE TO VISA SIGNATURES WITH A NAKED EYE ON DOCUMENTS REQUIRING TO BE SIGNED)",* **FIRST STEP: this procedure can be performed on a document of any kind with alphanumeric reference or without alphanumeric reference that requires to be signed and previously has placed and stuck manually or mechanically one or more obstacles that when submitted to the signature inspector (person who visas the submitted document) is already signed on the obstacle(s), considering such signature, the SIGNATURE QUESTIONED; SECOND STEP: and the structure of such signature questioned (the one affixed on the obstacle(s) the signature inspector proceeds to collate it with the structure of the signature is considered as undoubted to determine with a naked eye whether to accept or deny as a valid the signature questioned because according to the discretion of the signature inspector there were the precision conformity or disconformity between the structure of the collated signatures; THIRD STEP: the signature inspector accept or deny as valid the signature questioned. Being able to be considered a SIGNATURE AS UNDOUBTED the one that is previously registered on any other media or support on one or more obstacles or only on the blank corresponding area in such media or support, being able also to be considered a signature as undoubted the signature that is already affixed on an obstacle(s) in the original document. And this procedure can be repeated the times that the signature inspector deems convenient.**

2. *"JJASPON HANDWRITING ANALYSIS TEST WITH OBSTACLE TO VISA SIGNATURES WITH A NAKED EYE ON DOCUMENTS REQUIRING TO BE SIGNED (JJASPON HANDWRITING ANALYSIS TEST WITH OBSTACLE TO VISA SIGNATURES WITH A NAKED EYE ON DOCUMENTS REQUIRING TO BE SIGNED)",* **FIRST STEP: this procedure can be performed on a document of any kind with alphanumeric reference or without alphanumeric reference that requires to be signed and previously has placed and stuck manually or mechanically one or more obstacles that when submitted to the signature inspector (person who visas the submitted document) is already signed on the obstacle(s), considering such signature, the SIGNATURE QUESTIONED; SECOND STEP: then the signature inspector proceeds to place and stuck manually or mechanically other obstacle(s) at the document already signed or in other support different to the original document with the purpose that the signer in person proceeds to rubricate the signature again but now on other obstacle(s); THIRD STEP: and the structure of such resulting signature (the new one affixed on the obstacle(s)) -of the second step- the signature inspector proceeds to collate it against the structure of the signature questioned -of the first step- and against the structure of the signature is considered as undoubted to determine with a naked eye whether to accept or deny as a valid the signature questioned because according to the discretion of the signature inspector there were the precision conformity or disconformity in the structure of the collated signatures; FOURTH STEP: the signature inspector accept or deny as valid the signature questioned -of the first step-. Being able to be considered a SIGNATURE AS UNDOUBTED the one that is previously registered on any other media or support on one or more obstacles or only on the blank corresponding area in such media or support, being able also to be considered a signature as undoubted the signature that is already affixed on an obstacle(s) in the original document. And this procedure can be repeated the times that the signature inspector deems convenient.**

3. *"JJASPON HANDWRITING ANALYSIS TEST WITH OBSTACLE TO VISA SIGNATURES WITH A NAKED EYE ON DOCUMENTS REQUIRING TO BE SIGNED (JJASPON HANDWRITING ANALYSIS TEST WITH OBSTACLE TO VISA SIGNATURES WITH A NAKED EYE ON DOCUMENTS REQUIRING TO BE SIGNED)",* **FIRST STEP: this procedure can be performed on a document of any kind with alphanumeric reference or without alphanumeric reference that requires to be signed and that does not have one or more obstacles previously placed neither stuck manually or mechanically, and that is already signed on the space where the signature is affixed when it is submitted to the signature inspector (person who visas the submitted document), considering such signature, the SIGNATURE QUESTIONED; SECOND STEP: then the signature inspector proceeds to place and stick manually or mechanically other obstacle(s) at the document already signed or in other support different to the original document with the purpose that the signer in person proceeds to rubricate the signature again but now on the new obstacle(s); THIRD STEP: and in this way, the signature inspector proceeds to collate the structure of the resulting signature written on the new obstacle(s) -of the second step- against the structure of the signature is considered as questioned-of the first step-- and against the structure of the signature is considered as undoubted to determine with a naked eye whether to accept or deny as a valid the signature questioned because according to the discretion of the signature inspector there were the precision conformity or disconformity between the structure of the collated signatures; FOURTH STEP: the signature inspector accept or deny as valid the signature questioned -of the first step-. Being able to be considered a SIGNATURE AS UNDOUBTED the one that is previously registered on any other media or support on one or more obstacles or only on the blank corresponding area in such media or support, being able to be considered a signature as undoubted the signature that is already affixed initially on the corresponding space in the same document to visa. And this procedure can be repeated the times that the signature inspector deems convenient.**

4. *"JJASPON HANDWRITING ANALYSIS TEST WITH OBSTACLE TO VISA SIGNATURES WITH A NAKED EYE ON DOCUMENTS REQUIRING TO BE SIGNED (JJASPON HANDWRITING ANALYSIS TEST WITH OBSTACLE TO VISA SIGNATURES WITH A NAKED EYE ON DOCUMENTS REQUIRING TO BE SIGNED)",* **FIRST STEP: this procedure can be performed on a document of any kind with alphanumeric reference or without alphanumeric reference that requires to be signed and that does not have one or more obstacles previously placed neither stuck manually or mechanically, and that is not still signed on the space where the signature is affixed when it is submitted to the signature inspector (person who visas the submitted document), before who the signer proceeds to rubricate personally his/her signature on such space, considering such signature, the SIGNATURE QUESTIONED; SECOND STEP: then the signature inspector proceeds to place and stuck manually or mechanically an obstacle(s) at the document signed before the signature inspector or in other support different to the original document with the purpose that the signer in person proceeds to rubricate the signature again but on the new other obstacle(s); THIRD STEP: and in this way, the signature inspector proceeds to collate the structure of the resulting signature written on the obstacle(s)- of the second step-- against the structure of the signature is considered as questioned -of the first step-and against the structure of the signature is considered as undoubted to determine with a naked eye whether to accept or deny as a valid the signature questioned because according to the discretion of the signature inspector there were the precision conformity or disconformity in the structure of the collated signatures; FOURTH STEP: the signature inspector accept or deny as valid the signature questioned -of the first step-. Being to be considered a SIGNATURE AS UNDOUBTED the one that is previously registered on any other media or support on one or more obstacles or only on the blank corresponding area in such other media or support, and in the same way being able to be considered a signature as undoubted the questioned signature itself the one just that the signer has affixed on the corresponding space in the same document to be visaed before the signature inspector. And this procedure can be repeated the times that the signature inspector deems convenient.**

5. *"JJASPON HANDWRITING ANALYSIS TEST WITH OBSTACLE TO VISA SIGNATURES WITH A NAKED EYE ON DOCUMENTS REQUIRING TO BE SIGNED (JJASPON HANDWRITING ANALYSIS TEST WITH OBSTACLE TO VISA SIGNATURES WITH A NAKED EYE ON DOCUMENTS REQUIRING TO BE SIGNED)",* **FIRST STEP: this procedure can be performed on a document of any kind with alphanumeric reference or without alphanumeric reference that requires to be signed and that may or may not have one or more obstacles previously placed neither stuck manually or mechanically, and that is not still signed on the space where the signature must be affixed nor on the obstacle(s) if it is already placed and stuck to such document, and in this way a person is submitting the document without signature before the signature inspector (person who visas the submitted document); SECOND STEP: and then, in this case, the signature inspector place and stuck manually or mechanically an obstacle(s) at the original document if it does not have an obstacle(s) with the purpose that the signer in person proceeds to rubricate his/her signature on such obstacle(s) that is affixed in the original document but without signature, and execute it before the signature inspector, considering such signature, the SIGNATURE QUESTIONED; THIRD STEP: the signature inspector can to continuous to place and stuck manually or mechanically again other obstacle(s) on the same document to be visaed or in other support different to the original document with the purpose that the signer in person proceeds AGAIN to rubricate his/her signature again but now this time on other different obstacle(s) and the signature inspector can also request as a FOURTH STEP that the signer in person proceeds to rubricate his/her signature in the original document or in other support different but now without obstacle(s); FIFTH STEP: and then the signature inspector proceeds to collate the structure of the resulting signatures on the different obstacle(s) -of the second and/or third step-- and on without obstacle(s) -of the fourth step- and also to collate them with each other, can to collate each one of the resulting signature against the structure or the signature that is considered as questioned -of the second step-and against the structure of the signature that is considered as undoubted to determine with a naked eye if he/she accepts or deny as a valid the signature questioned because according to the discretion of the signature inspector there were the precision conformity or disconformity in the structure of the collated signatures; SIXTH STEP: the signature inspector accept or deny as valid the signature questioned -of the first step-. Being able to be considered a SIGNATURE AS UNDOUBTED the one that is previously registered on any other media or support on one or more obstacles or only on the blank corresponding area in such media or support, even being able even to be considered a signature as indubitable the one that just has been written in the same document to be visaed before the signature inspector without use the obstacle(s) and in the same way being able to be considered a signature as undoubted the one that the signer has affixed on the obstacle(s) placed ant stuck in the original document. And this procedure can be repeated the times that the signature inspector deems convenient.**

6. *"JJASPON HANDWRITING ANALYSIS TEST WITH OBSTACLE TO VISA SIGNATURES WITH A NAKED EYE ON DOCUMENTS REQUIRING TO BE SIGNED (JJASPON HANDWRITING ANALYSIS TEST WITH OBSTACLE TO VISA SIGNATURES WITH A NAKED EYE ON DOCUMENTS REQUIRING TO BE SIGNED)",* **FIRST STEP: this procedure can be performed on a document of any kind with alphanumeric reference or without alphanumeric reference that requires to be signed and which previously has placed and stuck manually or mechanically one or more obstacles, and the person who signs must sign on such obstacle(s); SECOND STEP: for an eventual test of expert or non-expert executed in any time, considering such signature, the SIGNATURE AS QUESTIONED AND INDUBITABLE at same time; THIRD STEP: in any time the expert or non-expert can accept or deny as valid the signature affixed in the first step.**

7. *"JJASPON HANDWRITING ANALYSIS TEST WITH OBSTACLE TO VISA SIGNATURES WITH A NAKED EYE ON DOCUMENTS REQUIRING TO BE SIGNED (JJASPON HANDWRITING ANALYSIS TEST WITH OBSTACLE TO VISA SIGNATURES WITH A NAKED EYE ON DOCUMENTS REQUIRING TO BE SIGNED)",* **FIRST STEP: this procedure can be performed on a document of any kind with alphanumeric reference or without alphanumeric reference that requires to be signed and that does not have one or more obstacles previously placed neither stuck manually or mechanically, and that is or is not signed on the space where the signature must be affixed when is submitted before whom must authenticate this signature, when before to attest the authenticity of the signature; SECOND STEP: he/she places and stuck manually or mechanically one or more obstacle in the same document and in any spot of the document, with the purpose that the person who signs repeats his/her signature writing it on the obstacle(s) placed and stuck. And then this signature is considered as undoubted, the first signature that the signer just has written; and such procedure can be repeated as many times as the whom must authenticate the signature deems convenient; put attention, that the authentication contained in a document by itself does not produce a signature considered as indubitable.**

8. *"JJASPON HANDWRITING ANALYSIS TEST WITH OBSTACLE TO VISA SIGNATURES WITH A NAKED EYE ON DOCUMENTS REQUIRING TO BE SIGNED (JJASPON HANDWRITING ANALYSIS TEST WITH OBSTACLE TO VISA SIGNATURES WITH A NAKED EYE ON DOCUMENTS REQUIRING TO BE SIGNED)"* **in any time during this procedure of claims one, two, three, four, five, six and seven of this invention, the obstacle(s) that is placed and stuck manually or mechanically on a document of any kind with alphanumeric reference or without alphanumeric reference that requires to be signed or in any other media or support external to the original document from the procedure of the invention, it may be comprised in stages up or down by several obstacles so that they form a ladder internal or / and external steps, and on which the signer proceeds to rubricate his/her signature; or (the) obstacle (s) may be positioned on a continuous or discontinuous one after the other individually or in batches; or in a staggered and continuous or discontinuous manner; symmetrically or asymmetrically form; in order or disorder; and the obstacle(s) can be of any material known or new to be discovered within the term of patent protection; likewise the obstacle(s) may be: square, round, rectangular or any geometric figure symmetric or asymmetric, of any color, of any size, printed or unprinted in any time or manner, perforated in its interior or not; also obstacle(s) caused by stamped metal or any material of any kind that makes furrows to in document; appropriate to the results required by the person who implements the invention.**
